# FASCICULE DE BREVET EUROPEEN

(11) **EP 2 433 525 B1**
(45) Date de publication et mention de la délivrance du brevet: **24.01.2018**
(21) Numéro de dépôt: 11182437.1
(22) Date de dépôt: 23.09.2011
(51) Int. Cl.: A47J 27/04

(54) **Dispositif mixeur-cuiseur à la vapeur**
Dampfgarer und mixer
Steam cooker-mixer

(30) Priorité: 24.09.2010 FR 1057700
(43) Date de publication de la demande: 28.03.2012
(73) Titulaire: Allegre Puericulture, 42000 Saint-Etienne (FR)
(72) Inventeur: Constans, Isabelle, 69440 Mornant (FR); Naoun, Alexandre, 69004 Lyon (FR)
(74) Mandataire: Intès, Didier Gérard André

(56) Documents cités:
- WO-A1-2010/023312
- DE-U1- 20 209 048
- FR-A1- 2 586 922
- FR-A1- 2 774 274
- US-A1- 2007 235 019

## Description

La présente invention est relative au domaine des dispositifs homogénéisateurs/mixeurs et cuiseurs à la vapeur.

### ETAT DE LA TECHNIQUE

Un dispositif mixeur-cuiseur à la vapeur comprend classiquement un générateur de vapeur, un moteur pour entraîner une hélice, et un récipient pour recevoir les aliments.

Pour améliorer la cuisson des aliments, il a été proposé des dispositifs mixeur-cuiseur à la vapeur dans lesquels la vapeur est amenée ou introduite au niveau du fond du récipient.

Le document US 6 550 372 décrit un dispositif mixeur-cuiseur comprenant une embase recevant le récipient. Un générateur de vapeur et un moteur sont logés dans l'embase. Le générateur de vapeur produit de la vapeur qui est introduite par le fond du récipient.

Les dispositifs mixeur-cuiseur dans lesquels la vapeur est introduite par le fond du récipient sont généralement plus complexes à manipuler, du fait notamment que l'ensemble des éléments le constituant sont disposés dans l'embase. Par ailleurs, l'introduction de la vapeur par le fond du récipient augmente les risques de fuite, ou de bouchage des canaux permettant le passage de la vapeur.

Le document FR 2 586 922 propose quant à lui un mixeur-cuiseur à vapeur dans lequel la vapeur est amenée au fond du récipient. Le mixeur-cuiseur à vapeur comprend un boîtier moteur contenant un moteur électrique sur lequel s'adapte un récipient amovible. Le moteur électrique sollicite un arbre et une hélice disposée à l'intérieur du récipient.

Le mixeur-cuiseur à vapeur comprend un couvercle destiné à coiffer le récipient amovible. Le couvercle comprend des canalisations radiale et centrale reliées à un générateur de vapeur. Les canalisations sont agencées dans le couvercle de sorte à amener la vapeur du générateur vers le fond du récipient.

Un inconvénient de ce mixeur-cuiseur est que le passage de la vapeur à travers les canalisations centrale et radiale du couvercle entraîne une augmentation de la température de celui-ci. L'utilisateur risque donc de se brûler en manipulant le couvercle du mixeur-cuiseur.

Un autre inconvénient est que des aliments peuvent obstruer l'extrémité du canal central lors de la mise en place du couvercle sur le récipient rempli d'aliments.

Le document FR 2 774 274 décrit un dispositif pour assurer le réchauffement et/ou la cuisson d'aliments. Le dispositif comprend :
- un générateur de vapeur destiné à produire de la vapeur pour chauffer ou cuire les aliments;
- un récipient de cuisson, recevant un panier de cuisson amovible pourvu d'ouvertures traversantes ménagées au voisinage de sa base,
- un couvercle amovible destine à coiffer le récipient.

Un but de la présente invention est de proposer un dispositif permettant de pallier au moins l'un des inconvénients précités. Plus précisément, un but de la présente invention est de proposer un dispositif mixeur-cuiseur manipulable sans risque, simple d'utilisation, robuste, ergonomique, et permettant d'amener la vapeur au niveau du fond du récipient pour la cuisson vapeur des aliments.

### PRESENTATION DE L'INVENTION

A cet effet on prévoit selon l'invention un dispositif pour réchauffer, cuire et/ou mixer des aliments comprenant :
- un générateur de vapeur,
- un récipient fermé de manière amovible par un couvercle (3), et dans lequel sont agencés :
   o un panier amovible à fond perforé pour contenir des aliments à cuire ou réchauffer,
   o une lame coupante agencée sous le panier, pour mixer les aliments placés dans le récipient,
- un moteur pour entraîner en rotation la lame ;
le dispositif est remarquable en ce que :
- le panier amovible comprend un canal central de vapeur **formé d'un tube s'étendant à l'intérieur du panier,**
- le couvercle comprend un canal radial de vapeur, communiquant avec le canal central, pour amener la vapeur depuis une bouche de sortie du générateur de vapeur jusqu'au canal central de vapeur et
- le couvercle comprend une paroi externe distante du canal radial.

La présence d'un couvercle comprenant un canal radial agencé de manière à coopérer avec un canal central d'un panier permet au dispositif selon l'invention d'amener la vapeur produite par le générateur au niveau du fond du panier contenant les aliments. Ceci présente l'avantage d'améliorer la qualité de la cuisson vapeur des aliments. Par ailleurs, l'association du canal radial du couvercle avec le canal central du panier permet de limiter les risques de fuite et d'obturation des différents canaux à vapeur lors de la manipulation du dispositif.

De plus, la présence d'un couvercle comprenant une paroi externe distante du canal radial permet d'isoler thermiquement le canal radial des parois du couvercle destinées à être manipulées. Ceci permet de limiter la température des parois externes du couvercle et limite les risques de brulure d'un utilisateur lors de sa manipulation.

Des aspects préférés, mais non limitatifs du dispositif selon la présente invention sont les suivants :
- le canal central est formé d'un tube s'étendant à l'intérieur du panier ;
- le canal central est défini par une paroi interne du panier, le panier comprenant en outre une paroi externe distincte de la paroi interne ;
- le canal radial est formé d'un tube s'étendant depuis une région périphérique du couvercle jusqu'à une région centrale du couvercle.
- le couvercle comporte un orifice pour l'évacuation de la vapeur ;
- le bord de l'orifice présente une forme adaptée pour faire retomber la vapeur condensée dans le récipient ; le bord de l'orifice a par exemple la forme d'une demi-sphère dont le centre est plus proche du panier que le sommet ;
- le bord de l'orifice présente une forme adaptée pour éviter le ruissellement de la vapeur d'eau condensée sur la paroi externe du couvercle ; le bord de l'orifice a par exemple la forme d'une demi-sphère dont le centre est plus éloigné du panier que le sommet ;
- le bord de l'orifice peut présenter une forme en sablier ; ceci permet à la fois de faire retomber la vapeur condensée dans le récipient et de limiter l'écoulement le long de la paroi externe du couvercle de la vapeur d'eau condensée qui peut se créer au niveau de l'orifice ;
- le dispositif comprend un deuxième panier qui vient se loger dans le premier
- le moteur est apte à entraîner la lame à au moins deux vitesses différentes ;
- le couvercle comprend une paroi interne destiné à venir en regard du panier et une paroi latérale pour connecter la paroi interne et la paroi externe, la paroi latérale comprenant au moins une ouverture traversante ; ceci permet de faciliter l'évacuation et/ou l'évaporation de l'eau pouvant s'introduire entre les parois externe et interne du couvercle, notamment lors du nettoyage du dispositif ;
- le canal radial est amovible ; ceci permet de faciliter le nettoyage de celui-ci ;
- le dispositif comprend des moyens pour briser les bulles d'eau susceptibles de se former dans le générateur de vapeur ; ces moyens peuvent être disposées dans le canal radial ou directement dans le réservoir du générateur de vapeur destiné à recevoir l'eau à évaporer ; dans tous les cas, ces moyens permettent de limiter le passage d'eau non évaporée depuis le générateur de vapeur jusqu'au récipient ;
- les moyens pour briser les bulles d'eau peuvent être positionnés en regard de la bouche de sortie de vapeur du générateur de vapeur ; ceci permet de diminuer encore la quantité d'eau non évaporée passant depuis le générateur de vapeur vers le récipient,
- les moyens pour briser les bulles peuvent comprendre une plaque, par exemple s'étendant perpendiculairement à un axe de la bouche de sortie du générateur de vapeur ;
- la bouche de sortie du générateur de vapeur est composée d'une excroissance tubulaire destinée à coopérer avec le canal radial du couvercle, l'excroissance tubulaire étant agencée de sorte que la face externe de l'excroissance tubulaire coopère avec la paroi interne du canal radial ; ceci permet de faciliter la connexion du générateur au couvercle ; l'excroissance tubulaire forme un joint entre le canal radial et le générateur de vapeur ; avantageusement, l'excroissance tubulaire peut être réalisée dans un matériau flexible; ceci permet aussi de limiter l'usure des différents éléments d'amené de la vapeur depuis le générateur de vapeur jusqu'au récipient ; l'excroissance tubulaire peut être réalisée dans un matériau élastique à retour de forme enfin, ceci permet d'améliorer l'étanchéité entre le générateur de vapeur et le canal radial du couvercle ;
- l'excroissance tubulaire est conçu dans un matériau flexible tel qu'un polymère ou un silicone.

### PRESENTATION DES FIGURES

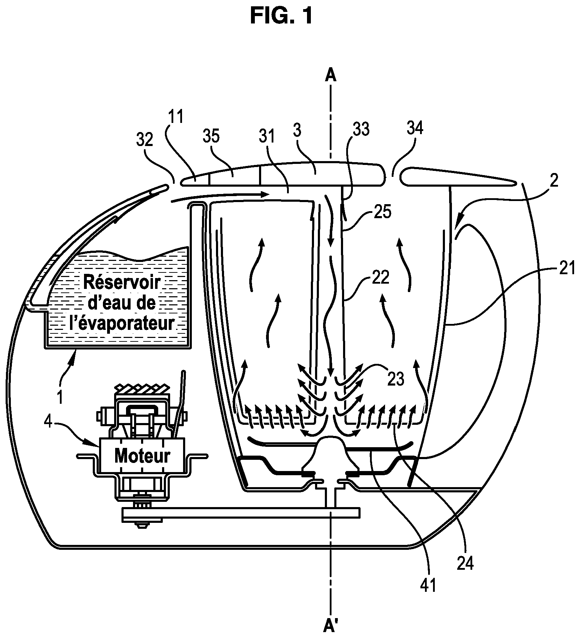

D'autres caractéristiques et avantages de l'invention ressortiront encore de la description qui suit, laquelle est purement illustrative et non limitative et doit être lue en regard de la figure 1 qui illustre une représentation en section d'un mode de réalisation du dispositif selon l'invention.

### DESCRIPTION

On va maintenant décrire le dispositif mixeur-cuiseur à la vapeur selon l'invention.

En référence à la figure 1, le dispositif comprend un générateur de vapeur 1, un récipient 2 fermé de façon amovible par un couvercle 3, et un moteur 4. Le dispositif comprend également un panier amovible 21 et une lame 22 disposés dans le récipient 2.

De préférence, le récipient est fixé de façon amovible à une embase formant un logement pour le générateur de vapeur 1 et le moteur 4.

Le générateur de vapeur 1 permet de produire de la vapeur à partir d'eau. Une ouverture 11 est ménagée dans l'embase support pour permettre le passage de la vapeur depuis le générateur de vapeur 1 vers le récipient 2.

Le générateur de vapeur comprend un réservoir destiné à recevoir l'eau à évaporer, et des moyens de chauffage de celle-ci. Avantageusement, le générateur de vapeur peut également comprendre des moyens pour briser les bulles se formant dans le réservoir lors de la génération de la vapeur. Ceci permet de limiter le passage d'une quantité d'eau non évaporée depuis le générateur de vapeur jusqu'au récipient. En effet, lors du chauffage de l'eau contenue dans le réservoir pour générer la vapeur d'eau, des bulles se forment à la surface de l'eau. Lorsque le réservoir du générateur contient beaucoup d'eau, des bulles d'eau peuvent venir en contact avec l'ouverture 11 de sortie de vapeur, de sorte qu'une portion d'eau non évaporée ne circule depuis le générateur de vapeur jusqu'au récipient. Le fait de disposer des moyens pour briser les bulles se formant dans le générateur de vapeur permet d'éviter que celle-ci ne viennent en contact avec l'ouverture 11 de sortie de vapeur et donc le risque de passage d'eau non évaporée depuis le générateur de vapeur jusqu'au récipient.

L'homme du métier appréciera que ces moyens pour briser les bulles peuvent être adaptés sur tout type de dispositif mixeur-cuiseur à la vapeur, indépendamment des variantes de réalisation illustrées ici.

De préférence, le couvercle 3 du dispositif comprend une double paroi qui évite à la paroi externe, qui est destinée à être manipulée par l'utilisateur, d'atteindre une température trop élevée.

Dans certaines variantes de réalisation, le couvercle 3 peut par ailleurs comprendre un orifice 34 permettant à la vapeur de s'échapper du récipient 2. Ceci permet d'éviter de trop forte pression à l'intérieur du récipient. Cela permet également de diriger le flux de vapeur vers l'extérieur du récipient 2 de façon contrôlée.

Avantageusement, la forme de l'orifice ménagé dans le couvercle est telle que l'eau provenant de la condensation de la vapeur sur le couvercle retombe dans le récipient. La forme de l'orifice ménagé dans le couvercle peut également être prévue pour

Le couvercle 3 et le panier 21 peuvent comprendre chacun des moyens complémentaires permettant l'acheminement de la vapeur depuis le générateur de vapeur 1 vers le fond du récipient. Le fait de disposer de moyens d'acheminement de la vapeur complémentaires sur le couvercle 3 et le panier 21 permet d'améliorer l'ergonomie du dispositif.

Dans le mode de réalisation illustré à la figure 1, le couvercle 3 comprend un canal radial 31 s'étendant radialement depuis la périphérie du couvercle 3 vers son centre.

L'extrémité périphérique 32 du canal radial 31 s'étend le long d'un rayon du couvercle 3. L'extrémité centrale 33 du canal radial 31 s'étend transversalement au plan du couvercle 3. Ainsi, lorsque le couvercle 3 coiffe le récipient 2, l'extrémité centrale 33 du canal radial 31 fait face au fond du récipient 2.

L'extrémité périphérique 32 du canal radial 31 est destinée à venir en regard du trou 11 ménagé dans l'embase support pour permettre l'acheminement de la vapeur depuis le générateur de vapeur 1 jusqu'au centre du couvercle 3.

Dans un mode de réalisation, l'ouverture 11 comprend une excroissance tubulaire s'étendant vers l'extérieur. Cette excroissance tubulaire peut être agencée de sorte que la face externe de l'excroissance tubulaire coopère avec la paroi interne du canal radial. Egalement, les formes de l'excroissance tubulaire et de l'extrémité du canal radial peuvent être prévues complémentaires pour limiter les fuites de vapeur entre le générateur de vapeur et le couvercle. Par exemple, les formes de l'extrémité tubulaire et du canal radial peuvent être tronconiques complémentaires.

Dans une variante de réalisation, l'extrémité tubulaire est réalisée dans un matériau flexible. Ceci permet de limiter de faciliter l'enfichage de l'excroissance tubulaire dans le canal radial.

Le panier 21 comprend un canal 22 s'étendant entre le dessus et le fond du panier. Le canal du panier présente une extrémité proximale 25 au niveau du dessus du panier et une extrémité distale au niveau du fond du panier.

Préférentiellement, l'extrémité proximale 25 du canal central 22 est au niveau de la partie supérieure du panier 21 définie par l'extrémité libre de la paroi latérale du panier ; encore plus préférentiellement, l'extrémité proximale 25 du canal central 22 est au dessus du niveau supérieur du panier. Ceci permet d'éviter les risques de bouchage du canal par les aliments contenus dans le panier 21.

Le canal central 22 est agencé de sorte que le canal radial du couvercle communique avec le canal central du panier lorsque le couvercle coiffe le récipient. Ceci permet d'amener la vapeur depuis le générateur de vapeur 1 vers la partie inférieure du récipient 2.

Dans le mode de réalisation illustré à la figure 1, le canal du panier est un canal central s'étendant le long d'un axe de révolution A-A' du panier 21. Toutefois, le lecteur appréciera que le canal du panier peut être disposé en différentes positions du panier. Par exemple, dans un mode de réalisation, le canal du panier s'étend le long d'une paroi de celui-ci.

Dans tous les cas, l'extrémité proximale 25 du canal 22 du panier 21 est destinée à coopérer avec l'extrémité centrale 33 du canal radial 31 lorsque le récipient 2 est coiffé du couvercle 3. Ceci permet de former un canal continu entre le générateur de vapeur 1 et le fond du panier 21 de sorte à acheminer la vapeur depuis le générateur de vapeur 1 jusqu'à la partie inférieure du récipient 2.

Les extrémités centrale 33 et proximale 25 des canaux 22, 31 peuvent avoir différentes formes. Par exemple, les extrémités centrale 33 et proximale 25 peuvent avoir des formes tronconiques complémentaires. Ceci permet de faciliter l'enfichage des extrémités centrale 33 et proximale 25 l'une dans l'autre. Cela permet également de garantir un contact intime entre les parois des extrémités centrale 33 et proximale 25 afin de limiter les fuites de vapeur au niveau de la connexion entre le canal radial 31 et le canal central 22.

Le canal central 22 peut comprendre des perforations 23 au niveau de l'extrémité distale pour le passage de la vapeur. Le fond du panier 21 peut également être perforé (perforations 24) de manière à permettre à la vapeur de remonter vers le couvercle 3 en traversant le fond du panier 21, cuisant ainsi les aliments.

Le dispositif comprend également une lame coupante 41 agencée sous le panier 21. Le moteur 4 disposé dans l'embase support permet la mise en rotation de la lame 41 pour le mixage des aliments après cuisson ou réchauffage de ceux-ci. De préférence, le moteur est apte à entraîner la lame à au moins deux vitesses différentes.

Le principe de fonctionnement du dispositif est le suivant. Une fois les aliments à cuire disposés dans le panier 21, celui-ci est introduit dans le récipient. Le canal central du panier s'étend verticalement au dessus des aliments. On ferme ensuite le dispositif en positionnant le couvercle au dessus du récipient. Le canal radial du couvercle, dont l'extrémité s'étend sensiblement le long de l'axe du canal central du panier, et s'enfiche dans le canal central du panier lors de la mise en place du panier. Une fois le dispositif fermé, le générateur de vapeur génère de la vapeur qui est acheminée jusqu'au fond du panier où elle s'échappe par les perforations du canal et/ou du fond du panier. La vapeur remonte en direction du couvercle en cuisant les aliments, et s'échappe par l'orifice du couvercle. Une fois la cuisson des aliments achevée, on retire le panier du récipient afin de vider l'éventuelle eau qui s'est formée au fond du récipient. Les aliments sont ensuite transférés du panier dans le récipient et des moyens de contrôle permettent de commander la mise en marche du moteur entraînant en rotation la lame de coupage.

Le lecteur appréciera que de nombreuses modifications peuvent être apportées à l'invention telle que décrite ci-dessus sans sortir matériellement des enseignements du présent document. Par conséquent, toutes ces modifications sont destinées à être incorporées à l'intérieur de la portée du dispositif tel qu'il est défini dans les revendications jointes.

## Revendications

1. Dispositif pour réchauffer, cuire et/ou mixer des aliments comprenant :
- un générateur de vapeur (1),
- un récipient (2) fermé de manière amovible par un couvercle (3), et dans lequel sont agencés :
- un panier (21) amovible à fond perforé pour contenir des aliments à cuire ou réchauffer,
- une lame (41) coupante agencée sous le panier, pour mixer les aliments placés dans le récipient,
- un moteur (4) pour entraîner en rotation la lame ;
le dispositif est **caractérisé en ce que** :
- le panier amovible comprend un canal central de vapeur (22) défini par une paroi interne du panier, le panier comprenant en outre une paroi externe distincte de la paroi interne,
- le couvercle comprend un canal radial de vapeur (31), formé d'un tube s'étendant depuis une région périphérique du couvercle jusqu'à une région centrale du couvercle, communiquant avec le canal central, pour amener la vapeur depuis une bouche de sortie du générateur de vapeur jusqu'au canal central de vapeur et
- le couvercle comprend une paroi externe (35) distante du canal radial.

2. Dispositif selon la revendication 1, dans lequel le couvercle comporte un orifice pour l'évacuation de la vapeur.

3. Dispositif selon la revendication 2, dans lequel le bord de l'orifice présente une forme adaptée pour faire retomber la vapeur condensée dans le récipient.

4. Dispositif selon la revendication 3, dans lequel le bord de l'orifice présente une forme adaptée pour éviter le ruissellement de la vapeur d'eau condensée sur la paroi externe du couvercle.

5. Dispositif selon l'une des revendications 1 à 4, lequel comprend en outre un deuxième panier agencé au-dessus du premier panier.

6. Dispositif selon l'une des revendications 1 à 5, dans lequel le moteur est apte à entraîner la lame à au moins deux vitesses différentes.

7. Dispositif selon l'une des revendications 1 à 6, dans lequel le couvercle comprend une paroi interne destiné à venir en regard du panier et une paroi latérale pour connecter la paroi interne et la paroi externe, la paroi latérale comprenant au moins une ouverture traversante.

8. Dispositif selon l'une des revendications 1 à 7, dans lequel le canal radial est amovible.

9. Dispositif selon l'une des revendications 1 à 8, lequel comprend des moyens pour briser les bulles d'eau susceptibles de se former dans le générateur de vapeur.

10. Dispositif selon la revendication 9, dans lequel les moyens pour briser les bulles d'eau sont positionnés en regard de la bouche de sortie de vapeur.

11. Dispositif selon l'un des revendications 9 ou 10, dans lequel les moyens pour briser les bulles comprennent une plaque.

12. Dispositif selon l'une des revendications 1 à 11, dans lequel la bouche de sortie du générateur de vapeur est composée d'une excroissance tubulaire destinée à coopérer avec le canal radial du couvercle, l'excroissance tubulaire étant agencée de sorte que la face externe de l'excroissance tubulaire coopère avec la paroi interne du canal radial.

13. Dispositif selon la revendication 12, dans lequel l'excroissance tubulaire est conçue dans un matériau flexible tel qu'un polymère, notamment du type silicone.

14. Dispositif selon l'une des revendications précédentes, dans lequel le canal central est formé d'un tube s'étendant à l'intérieur du panier.

## Patentansprüche

1. Vorrichtung zum Aufwärmen, Kochen und/oder Mixen von Nahrungsmitteln, umfassend:
- einen Dampferzeuger (1),
- einen Behälter (2), der durch einen Deckel (3) abnehmbar geschlossen ist und in dem angeordnet ist:
- ein herausnehmbarer Korb (21) mit perforiertem Boden, um die zu kochenden oder aufzuwärmenden Nahrungsmittel zu enthalten,
- eine Schneidklinge (41), die unter dem Korb angeordnet ist, um die Nahrungsmittel zu mixen, die in dem Behälter positioniert sind,
- ein Motor (4), um die Klinge in Drehung zu versetzen,
wobei die Vorrichtung **dadurch gekennzeichnet ist, dass**:
- der herausnehmbare Korb einen zentralen Dampfkanal (22) aufweist, der durch eine Innenwand des Korbs definiert ist, wobei der Korb ferner eine Außenwand aufweist, die von der Innenwand verschieden ist,
- der Deckel einen radialen Dampfkanal (31) aufweist, der aus einem Rohr gebildet ist, das sich von einem peripheren Bereich des Deckels bis zu einem zentralen Bereich des Deckels, der mit dem zentralen Kanal in Verbindung steht, erstreckt, um den Dampf von einer Auslassöffnung des Dampferzeugers bis zu dem zentralen Dampfkanal zu führen, und
- der Deckel eine Außenwand (35) aufweist, die von dem radialen Kanal entfernt ist.

2. Vorrichtung nach Anspruch 1, wobei der Deckel eine Öffnung zum Auslassen des Dampfes aufweist.

3. Vorrichtung nach Anspruch 2, wobei der Rand der Öffnung eine Form aufweist, die geeignet ist, um den kondensierten Dampf wieder in den Behälter fallen zu lassen.

4. Vorrichtung nach Anspruch 3, wobei der Rand der Öffnung eine Form aufweist, die geeignet ist, um das Abfließen des kondensierten Wasserdampfes auf der Außenwand des Deckels zu verhindern.

5. Vorrichtung nach einem der Ansprüche 1 bis 4, die ferner einen zweiten Korb aufweist, der über dem ersten Korb angeordnet ist.

6. Vorrichtung nach einem der Ansprüche 1 bis 5, wobei der Motor geeignet ist, die Klinge mit mindestens zwei unterschiedlichen Geschwindigkeiten anzutreiben.

7. Vorrichtung nach einem der Ansprüche 1 bis 6, wobei der Deckel eine Innenwand, die dazu bestimmt ist, dem Korb gegenüberzuliegen, und eine Seitenwand zum Verbinden der Innenwand und der Außenwand aufweist, wobei die Seitenwand mindestens eine durchgehende Öffnung aufweist.

8. Vorrichtung nach einem der Ansprüche 1 bis 7, wobei der radiale Kanal abnehmbar ist.

9. Vorrichtung nach einem der Ansprüche 1 bis 8, die Mittel zum Zerplatzenlassen der Wasserblasen aufweist, die sich in dem Dampferzeuger bilden können.

10. Vorrichtung nach Anspruch 9, wobei die Mittel zum Zerplatzenlassen der Wasserblasen gegenüber von der Dampfauslassöffnung angeordnet sind.

11. Vorrichtung nach einem der Ansprüche 9 oder 10, wobei die Mittel zum Zerplatzenlassen der Wasserblasen eine Platte aufweisen.

12. Vorrichtung nach einem der Ansprüche 1 bis 11, wobei die Auslassöffnung des Dampferzeugers aus einem röhrenförmigen Vorsprung gebildet ist, der dazu bestimmt ist, mit dem radialen Kanal des Deckels zusammenzuwirken, wobei der röhrenförmige Vorsprung derart ausgebildet ist, dass die Außenseite des röhrenförmigen Vorsprungs mit der Innenwand des radialen Kanals zusammenwirkt.

13. Vorrichtung nach Anspruch 12, wobei der röhrenförmige Vorsprung aus einem flexiblen Material, wie einem Polymer, insbesondere vom Silikontyp, ausgebildet ist.

14. Vorrichtung nach einem der vorhergehenden Ansprüche, wobei der zentrale Kanal aus einem Rohr gebildet ist, das sich im Inneren des Korbs erstreckt.

## Claims

1. Device for heating, cooking and/or mixing food, comprising:
a steam generator (1),
a vessel (2) removably closed by a lid (3), and in which are arranged:
a removable basket (21) with a perforated bottom to contain food to be cooked or heated,
a cutting blade (41) arranged underneath the basket, to mix the food placed in the vessel,
a motor (4) to drive the blade in rotation;
the device being **characterized in that**:
- the removable basket comprises a central steam channel (22), defined by an inner wall of the basket, the basket further comprising an outer wall distinct from the inner wall,
- the lid comprises a radial steam channel (31), formed by a tube extending from a peripheral region of the lid to a central region of the lid, communicating with the central channel, to convey steam from an outlet of the steam generator towards the central steam channel, and
- the lid comprises an outer wall distant from the radial channel.

2. The device according to claim 1, wherein the lid comprises an orifice to evacuate steam.

3. The device according to claim 2, wherein the rim of the orifice is shaped to cause condensed steam to fall back into the vessel.

4. The device according to claim 3, wherein the rim of the orifice is shaped to avoid run-off of condensed water vapour over the outer wall of the lid.

5. The device according to any one of claims 1 to 4, which further comprises a second basket arranged above the first basket.

6. The device according to any one of claims 1 to 5, wherein the motor is capable of driving the blade at least at two different speeds.

7. The device according to any one of claims 1 to 6, wherein the lid comprises an inner wall intended to come to lie facing the basket, and a side wall to connect the inner wall and the outer wall, the side wall comprising at least one through opening.

8. The device according to any one of claims 1 to 7, wherein the radial channel is removable.

9. The device according to claim 1, which comprises means to break up water bubbles which may form in the steam generator.

10. The device according to any one of claims 9 to 10, wherein the means to break up water bubbles are positioned facing the steam outlet.

11. The device according to any one of claims 9 to 11, wherein the means to break up bubbles comprise a plate.

12. The device according to claim 1, wherein the outlet of the steam generator is composed of a tubular projection intended to cooperate with the radial channel of the lid, the tubular projection being arranged so that the outer face of the tubular projection cooperates with the inner wall of the radial channel.

13. The device according to claim 12, wherein the tubular projection is provided in a flexible material, as a polymer, especially of the silicone type.

14. The device to any one of the preceding claims, wherein the radial channel is formed by a tube extending inside the basket.
